# EUROPÄISCHE PATENTSCHRIFT

(11) **EP 0 489 228 B1**
(45) Veröffentlichungstag und Bekanntmachung des Hinweises auf die Patenterteilung: **05.06.1996**
(21) Anmeldenummer: 91113356.9
(22) Anmeldetag: 08.08.1991
(51) Int. Cl.: G05B 19/045

(54) **Automatisierungssystem mit einem Programmiergerät und einem Automatisierungsgerät**
Automation system with a programming device and an automation device
Système d'automatisation avec un appareil de programmation et un dispositif d'automatisation

(30) Priorität: 03.12.1990 DE 4038533
(43) Veröffentlichungstag der Anmeldung: 10.06.1992
(73) Patentinhaber: SIEMENS AKTIENGESELLSCHAFT, D-80333 München (DE)
(72) Erfinder: Gentner, Jürgen, Dr.-Ing., W-7500 Karlsruhe (DE); Hinsken, Gerhard, Prof. Dr.-Ing., W-7600 Offenburg (DE)

(56) Entgegenhaltungen:
- EP-A- 0 225 715
- EP-A- 0 266 065
- US-A- 4 075 707
- U.TIETZE,CH.SCHENK 'Halbleiter-Schaltungstechnik' März 1990 , SPRINGER-VERLAG , BERLIN,DE
- PATENT ABSTRACTS OF JAPAN vol. 7, no. 32 (P-174)(1177) 8. Februar 1983 & JP-A-57 185 505
- PATENT ABSTRACTS OF JAPAN vol. 8, no. 60 (P-262)(1497) 22. März 1984 & JP-A-58 211 207
- Wratil, P., "Speicherprogrammierbare Steuerung in der Automatisierungstechnik" - 1. Auflage", 1989, Vogel Verlag, Würzburg, Seiten 78, 79

## Beschreibung

Die Erfindung betrifft ein Automatisierungssystem gemäß dem Oberbegriff des Anspruchs 1.

Häufig werden zur Lösung von Automatisierungsaufgaben Automatisierungssysteme eingesetzt, die aus einem Automatisierungsgerät und einem Programmiergerät bestehen. Mit dem Programmiergerät wird die Steuerungsaufgabe in einer Programmiersprache formuliert und in einen Speicher des Automatisierungsgerätes, z. B. in einen Speicher einer Zentralbaugruppe oder einer Peripheriebaugruppe, hinterlegt. Das Programm ist im Speicher gewöhnlich derart strukturiert, daß der entsprechende Prozessor im Automatisierungsgerät dieses Programm seriell bearbeiten kann.

Aus dem "Siemens-Programmierhandbuch für Ablaufsteuerungen mit S5-110A, SIMATIC S5", 1983, ist ein Automatisierungssystem der eingangs beschriebenen Art bekannt. Ein für eine Binärsignalverarbeitung ausgelegtes Steuerprogramm wird mit einem Programmiergerät in einer Programmiersprache erstellt und in einem Speichermodul hinterlegt. Nach der Programmierung wird das Speichermodul aus dem Programmiergerät herausgenommen und in die Zentralbaugruppe gesteckt, deren Prozessor für eine Binärsignalverarbeitung ausgelegt ist. Während des Betriebs des Automatisierungsgerätes werden die einzelnen Anweisungen des Steuerprogramms entsprechend einer Bearbeitung mit einer Von-Neumann-Maschine aus dem Speichermodul nach und nach ausgelesen, interpretiert und die entsprechenden Operationen, z. B. logische Verknüpfungen von Prozeßein- und -ausgangsdaten, ausgeführt. Durch die serielle Bearbeitung des Steuerprogramms ist die Reaktionszeit auf Zustandsänderungen der Eingangsdaten abhängig von der Programmlänge und der Bearbeitungszeit je Anweisung.

Aus der europäischen Patentanmeldung 0 266 065 ist eine programmierbare Folgesteuerung mit einem ersten und einem zweiten programmierbaren Feld bekannt. Die Folgesteuerung weist ferner einen Zähler auf, der mehrere Ausgänge aufweist, die jeweils an einen Eingang des ersten Feldes angeschlossen sind, wobei der Zähler wenigstens einen ersten Eingang aufweist, der den Betrieb des Zählers steuert und an einen Ausgang des zweiten Feldes angeschlossen ist.

In der Druckschrift "Speicherprogrammierbare Steuerungen in der Automatisierungstechnik", P. Wratil, 1. Auflage 1989, ist beschrieben, kleinste Versionen von speicherprogrammierbaren Steuerungen mit programmierbaren Logikbausteinen zu versehen. Es wird vorgeschlagen, diese Steuerungen nur beim Einsatz von statisch logischen Kombinationen zu verwenden, da Grundelemente wie Zähler oder Timer fehlen.

Der vorliegenden Erfindung liegt die Aufgabe zugrunde, ein Automatisierungssystem gemäß dem Oberbegriff des Anspruchs 1 zu schaffen, welches auch die Bearbeitung von Zeit- und Zählfunktionen ermöglicht.

Diese Aufgabe wird durch die im kennzeichnenden Teil des Anspruchs 1 angegebenen Maßnahmen gelöst.

Das Automatisierungsgerät ist mit einem programmierbaren Logikbaustein versehen, z. B. PAL- oder FPLA-Baustein, der während des Steuerbetriebs die Prozeßeingangsdaten gemäß dem Prinzip eines Zustandsautomaten in entsprechende Prozeßausgangsdaten umformt, was zu einer Verkürzung der Reaktionszeit des Automatisierungsgerätes führt. Während des Steuerbetriebs des Automatisierungsgerätes ist ein Programmlesen des Steuerprogramms nicht mehr erforderlich. Aufbau und Funktionsweise von programmierbaren Logikbausteinen sowie Entwurf und Optimierung von programmierbarer Logik sind aus der Druckschrift 'Programmierbare Logik - Von den Grundlagen zur Applikation", Elektronik-Sonderheft Nr. 208, 1985, bekannt. Der Anwender erstellt - wie gewöhnlich - auf dem Programmiergerät in der üblichen Programmiersprache ein Steuerprogramm zur Lösung einer Steuerungsaufgabe. Dieses Steuerprogramm wird im Programmiergerät oder im Automatisierungsgerät in eine zum Programmieren des programmierbaren Logikbausteins erforderliche Form umgesetzt, und schließlich wird der programmierbare Logikbaustein mit diesem umgesetzten Programm programmiert.

In einer Ausgestaltung der Erfindung wird erreicht, daß eine sequentielle Weiterverarbeitung entsprechend der Verknüpfungsvorschrift im Steuerprogramm bearbeitet werden kann.

Ist der Logikbaustein als RAM-programmierbarer Baustein ausgebildet, so kann dieser, falls erforderlich, einfach umprogrammiert werden.

Anhand der Zeichnung, in der ein Ausführungsbeispiel veranschaulicht ist, werden die Erfindung, deren Ausgestaltungen sowie Vorteile näher erläutert.

Es zeigen
- Figur 1: ein Blockschaltbild eines Automatisierungsgerätes,
- Figur 2: ein Blockschaltbild eines Prozessors einer Zentralbaugruppe,
- Figur 3: Steueranweisungen für ein Automatisierungsgerät,
- Figur 4: eine Struktur eines Logikbausteins nach seiner Programmierung,
- Figur 5: Steueranweisungen mit einer sequentiellen Weiterverknüpfung,
- Figur 6: eine weitere Struktur eines Logikbausteins nach seiner Programmierung,
- Figur 7: ein Zeitdiagramm der in Figur 2 und Figur 6 aufgeführten Signale,
- Figur 8: ein Blockschaltbild eines weiteren Prozessors einer Zentralbaugruppe.

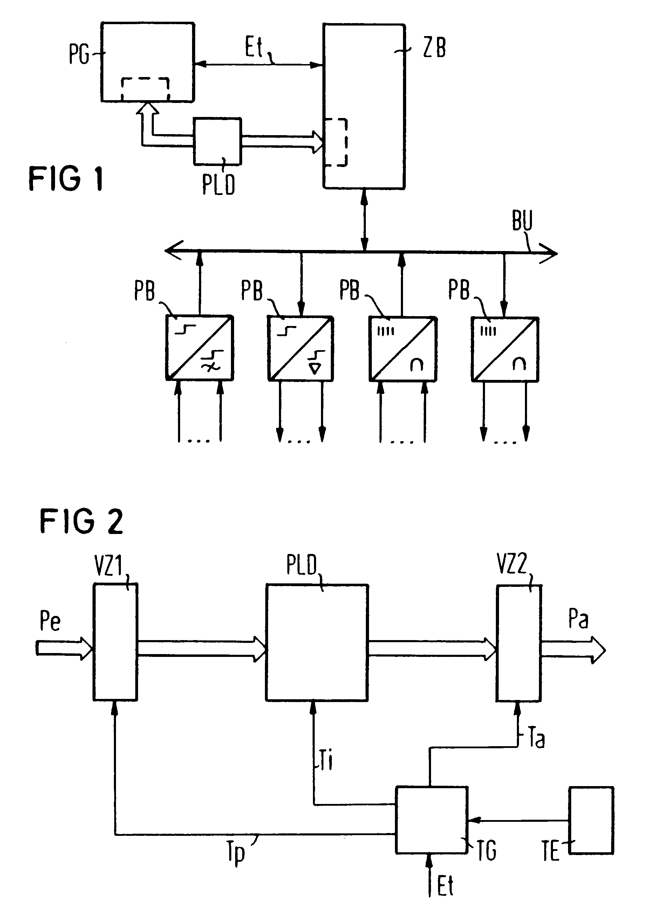

In Figur 1 ist mit PG ein Programmiergerät bezeichnet, mit dem ein Steuerprogramm zur Lösung einer Automatisierungsaufgabe erstellt wird. Über eine Leitung Et überträgt das Programmiergerät PG Steuerinformationen zu einer Zentralbaugruppe ZB eines Automatisierungsgerätes. Es wird vorausgesetzt, daß das Steuerprogramm für eine Binärsignalverarbeitung vorgesehen ist und binäre Funktionen, wie binäre Verknüpfungen oder Speicherfunktionen, verwirklicht. Das Steuerprogramm ist für eine serielle Bearbeitung strukturiert und in einem hier nicht dargestellten Speicher des Programmiergeräts PG hinterlegt. Die Zentralbaugruppe ZB und Peripheriebaugruppen PB, die über einen Bus BU mit der Zentralbaugruppe ZB gekoppelt sind, sind Bestandteile des Automatisierungsgerätes. Die Peripteriebaugruppen PB können z. B. digitale oder analoge Ein-/Ausgabebaugruppen sein. Um die Prozeßeingangsdaten entsprechend einer im Steuerprogramm vorgegebenen Verknüpfungsvorschrift in Prozeßausgangsdaten umzuformen, ist die Zentralbaugruppe ZB des Automatisierungsgerätes erfindungsgemäß mit einem programmierbaren Logikbaustein PLD versehen. Dieser Logikbaustein PLD kann z. B. ein PAL- oder ein FPLA-Baustein oder ein RAM-programmierbarer Baustein sein. Dazu ist es zunächst erforderlich, daß dieser Logikbaustein PLD entsprechend programmiert wird. Das im Speicher des Programmiergeräts PG hinterlegte, für eine serielle Bearbeitung strukturierte Steuerprogramm wird zunächst aus diesem Speicher ausgelesen und in eine zum Programmieren des Logikbausteins PLD erforderliche Form, z. B. in eine sogenannte Normalform, umgesetzt. Mit diesen neuen Programmdaten wird der Logikbaustein PLD programmiert, wobei diese zweckmäßig vor der eigentlichen Programmierung des Logikbausteins PLD mit einem an sich bekannten Programmsystem optimiert werden. Das bedeutet, die Verknüpfungslogik wird minimiert und die minimierten Programmdaten zum Programmieren des Logikbausteins PLD erstellt. Das Programmiergerät PG ist mit einer Programmierkarte (nicht dargestellt) versehen, auf die der Logikbaustein PLD gesteckt ist. Diese Programmierkarte wird mit den umgesetzten Programmierdaten versorgt, um den Logikbaustein PLD zu programmieren. Der Logikbaustein PLD wird nun aus dem Programmiergerät PG herausgenommen - im Beispiel mit unterbrochenen Linien angedeutet - und in die Zentralbaugruppe ZB eingesetzt. Das Steuerprogramm, das ein Anwender in einer gewöhnlichen Programmiersprache erstellt hat, wird nicht mehr im Automatisierungsgerät seriell bearbeitet, um für Prozeßeingangsdaten entsprechende Prozeßausgangsdaten zur Steuerung eines Prozesses zu erstellen. In dem neuen Automatisierungssystem wird dieses Steuerprogramm zum Programmieren des Logikbausteins PLD im Automatisierungsgerät genutzt, so daß parallel anliegende Prozeßeingangsdaten während des Steuerbetriebs des Automatisierungsgerätes in entsprechende Prozeßausgangsdaten umgeformt werden, wobei die Prozeßausgangsdaten parallel auf dem Bus BU bereitstehen. Durch die parallele Bearbeitung der Prozeßeingangsdaten wird die Reaktionszeit auf deren Änderungen verkürzt.

Selbstverständlich ist es möglich, das mit dem Programmiergerät PG erstellte Steuerprogramm in einem Speicher des Automatisierungsgerätes zu hinterlegen. Für diesen Fall muß eine Umsetzung des Steuerprogramms in die Normalform und die Programmierung des Logikbausteins PLD im Automatisierungsgerät erfolgen.

Ist ein häufiges Umprogrammieren des Logikbausteins PLD erforderlich, so wird dieser als RAM-programmierbarer Baustein ausgebildet. Mehrere Steuerprogramme werden im Speicher hinterlegt, bei Bedarf in die Normalform umgesetzt und schließlich wird der RAM-programmierbare Baustein mit diesen Programmdaten programmiert. Eine Umprogrammierung kann auch während des Betriebs erfolgen.

Figur 2 zeigt in einem Blockschaltbild einen Prozessor einer Zentralbaugruppe. Prozeßeingangsdaten Pe werden von einer Peripheriebaugruppe PB über den Bus BU (Figur 1) der Zentralbaugruppe ZB aufgeschaltet und in einem ersten Verzögerungsregister VZ1 hinterlegt. Ein Taktgeber TG, der mit einem Grundtakt eines Takterzeugers TE versorgt wird, erzeugt einen Takt Tp, der bei einem Taktflankenwechsel von einem Pegel 0 auf einen Pegel 1 bewirkt, daß die Prozeßeingangsdaten Pe im ersten Verzögerungsregister VZ1 dem Logikbaustein PLD aufgeschaltet werden. Der Taktgeber TG erzeugt weiterhin einen Takt Ti, der für den Betrieb des Logikbausteins PLD erforderlich ist, sowie einen Takt Ta, der benötigt wird, um die vom Logikbaustein PLD in ein zweites Verzögerungsregister VZ2 hinterlegten Prozeßausgangsdaten Pa auf den Bus BU des Automatisierungsgerätes (Figur 1) zu schalten. Die Taktfrequenzen der Takte Tp, Ti und Ta sind abhängig von der Struktur des Steuerprogramms. Weist das Steuerprogramm kombinatorische Verknüpfungen lediglich der Prozeßeingangsdaten auf, d. h., werden Prozeßausgangsdaten im Logikbaustein PLD nicht rückgekoppelt und werden auch keine Speicherfunktionen im Steuerprogramm verwirklicht, so liegt das Verknüpfungsergebnis bereits nach jedem Taktschritt des Taktes Ti im zweiten Verzögerungsregister VZ2 vor, und es wird nach Anliegen des Taktes Ta auf den Bus BU (Figur 1) weitergeschaltet. Weist dagegen das Steuerprogramm sequentielle Weiterverarbeitungen auf, so wird dies von einer Einheit des Programmiergerätes PG (nicht dargestellt) erkannt. Diese ermittelt die Anzahl der sequentiellen Weiterverarbeitungen und stellt über eine Leitung Et den Taktgeber TG der Zentralbaugruppe derart ein, daß für jede sequentielle Weiterverarbeitung der Takt Ti für den Logikbaustein PLD während eines Verarbeitungszyklus um einen Taktschritt erhöht wird. Stellt die Einheit des Programmiergerätes PG z. B. in einem Steuerprogramm drei sequentielle Weiterverarbeitungen fest, so wird der Takt Ti um drei Taktschritte erhöht. Das bewirkt, daß ein Prozeßausgangssignal erst nach drei weiteren Taktschritten im zweiten Verzögerungsregister VZ2 hinterlegt wird und danach ein aktiviertes Taktsignal Ta die Prozeßausgangsdaten Pa auf den Bus BU schaltet.

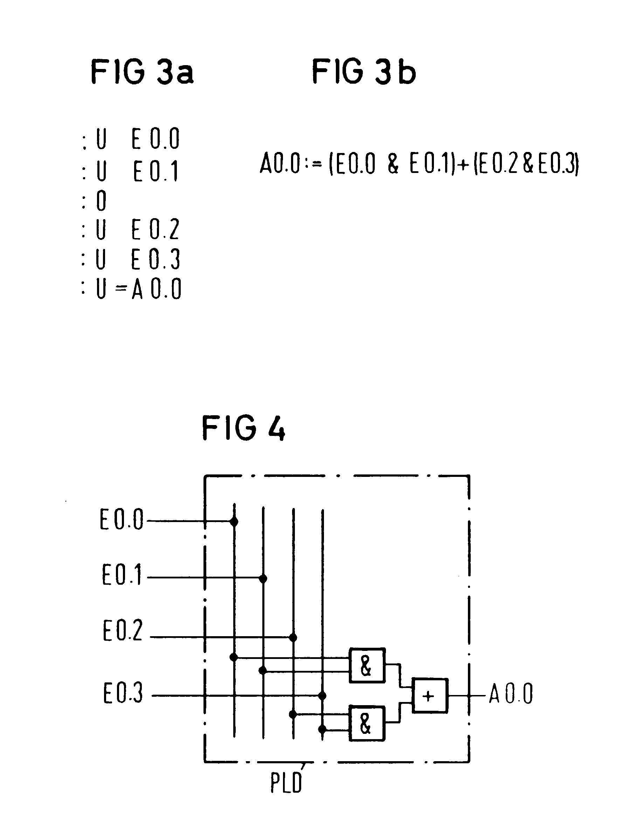

Figur 3 zeigt Steueranweisungen für ein Automatisierungsgerät, wobei in Figur 3a die Steueranweisungen in der bekannten Programmiersprache STEP 5 der Siemens-Automatisierungsgeräte formuliert sind. Es bedeuten E0.0 bis E0.3 Prozeßeingangsdaten und A0.0 ein Prozeßausgangsdatum. Eine UND- bzw. ODER-Verknüpfung ist mit "U" bzw. "O" gekennzeichnet. Figur 3b zeigt eine zum Programmieren eines Logikbausteins PLD erforderliche bekannte Normalform, die im Programmiergerät aus den Steueranweisungen gemäß Figur 3a gebildet wurde. Dabei kennzeichnen die Zeichen "&" bzw. "+" die UND- bzw. ODER-Verknüpfungen. Figur 4 zeigt die innere Struktur des Logikbausteins PLD (Figur 2) nach der Programmierung nach der Steueranweisung gemäß Figur 3b. Die Prozeßeingangsdaten E0.0 bis E0.3 werden parallel in das Prozeßausgangsdatum A0.0 umgeformt, ein serielles Programmlesen des Steuerprogramms entsprechend Figur 3a während des Steuerbetriebs entfällt.

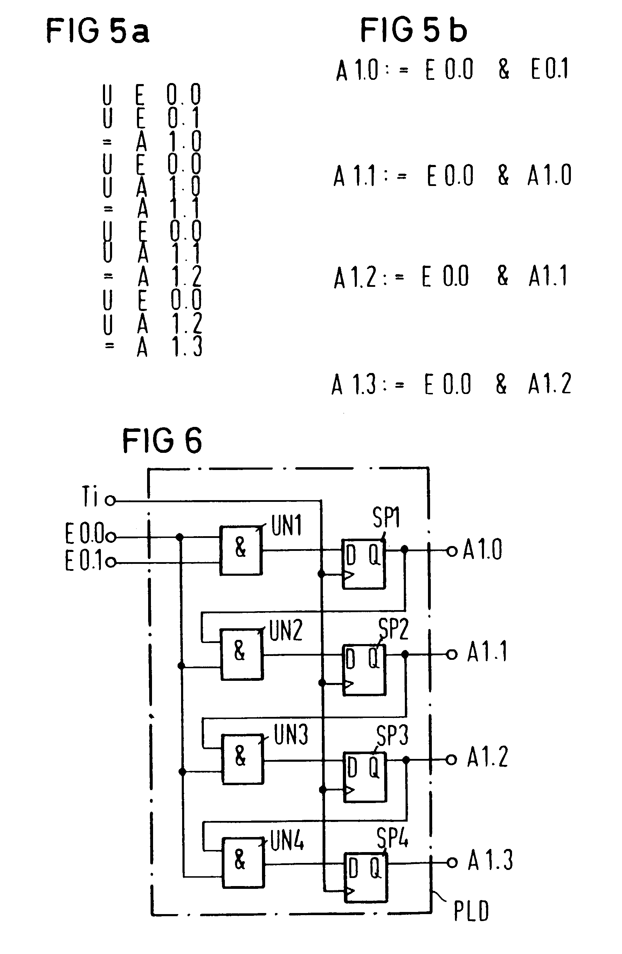

Figur 5 zeigt wiederum Steueranweisungen für ein Automatisierungsgerät, wobei eine Weiterverknüpfung von Prozeßausgangssignalen vorgesehen ist. Die in Figur 5 vorkommenden gleichen Teile wie in Figur 3 sind mit gleichen Bezugszeichen gekennzeichnet. Ein Ausgangssignal A1.3 (Figur 5a) wird aus dem Eingangssignal E0.0 und einem Ausgangssignal A1.2 gebildet, wobei das Ausgangssignal A1.2 eine Funktion des Eingangssignals E0.0 mit einem Ausgangssignal A1.1 ist. Das Ausgangssignal A1.1 wiederum wird aus dem Eingangssignal E0.0 und einem Ausgangssignal A1.0 gebildet, das von den Eingangssignalen E0.0 und E0.1 erzeugt wird. Um das Ausgangssignal A1.3 zu erhalten, sind also drei sequentielle Weiterverarbeitungen erforderlich. Figur 5b zeigt die entsprechende Darstellung des STEP-5-Programms in der Normalform. Die Struktur des Logikbausteins nach der Programmierung zur Verwirklichung der Steueranweisung zeigt Figur 6. Es bedeuten D die Dateneingänge und Q die Ausgänge von Speicherbausteinen SP1 ... SP4, die der Logikbaustein PLD aufweist. Damit das korrekte Ergebnis entsprechend den Steueranweisungen gemäß Figur 5a am Ausgang des Logikbausteins erscheint, muß der Takt Ti (Figur 2) um drei Taktschritte erhöht werden.

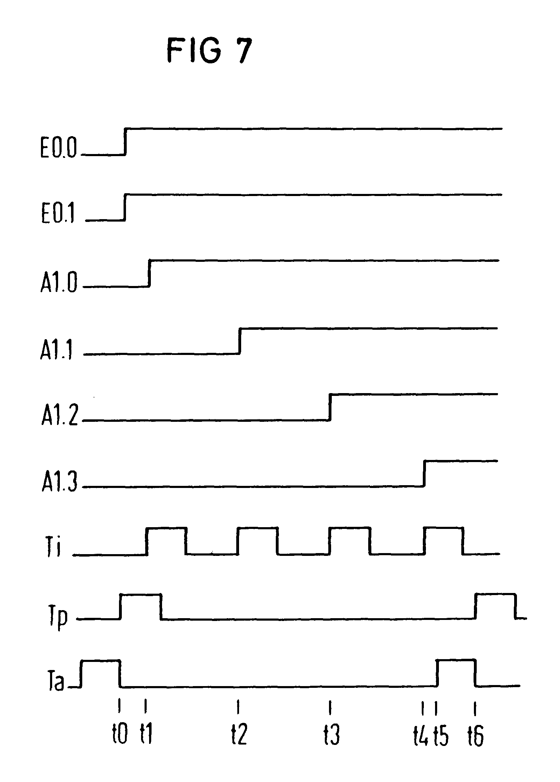

Zur Verdeutlichung des Zusammenhangs zwischen der Anzahl der Taktschritte und einer sequentiellen Weiterverarbeitung eines Ausgangssignals zeigt Figur 7 ein Zeitdiagramm der in Figur 2 und Figur 6 aufgeführten Signale. Zu einem Zeitpunkt t0 wird der Takt Tp vom Taktgeber TG (Figur 2) auf das Verzögerungsregister VZ1 geschaltet und dessen ansteigende Flanke bewirkt, daß die Prozeßeingangssignale E0.0 und E0.1 über ein erstes UND-Gatter UN1 dem ersten Speicherbaustein SP1 aufgeschaltet werden (Figur 6). Während eines Verarbeitungszyklus zwischen dem Zeitpunkt t0 und einem Zeitpunkt t6 wird zu einem Zeitpunkt t1 der Takt Ti für den Logikbaustein aktiv, und das Ausgangssignal A1.0 wechselt daraufhin seinen Zustandspegel. Dieses Ausgangssignal A1.0, das rückgekoppelt ist und mit dem Eingangssignal E0.0 auf ein zweites UND-Gatter UN2 wirkt, verursacht zu Beginn des nächsten Taktschrittes zu einem Zeitpunkt t2, daß der zweite Speicherbaustein SP2 über seinen Ausgang Q das Ausgangssignal A1.1 setzt. Dieses Ausgangssignal A1.1 wird wiederum rückgekoppelt auf ein drittes UND-Gatter UN3 und bewirkt mit dem Eingangssignal E0.0 zu einem Zeitpunkt t3, daß ein Ausgangssignal A1.2 gesetzt wird. Entsprechend wird das Ausgangssignal A1.2 auf ein viertes UND-Gatter UN4 rückgekoppelt und bewirkt mit dem Eingangssignal E0.0 zu einem Zeitpunkt t4 das Ausgangssignal A1.3. Dieser Signalzustand entspricht den Vorgaben der Steueranweisungen nach Figur 5a und wird im Verzögerungsregister VZ2 (Figur 2) hinterlegt. Zu einem Zeitpunkt t5 ist der Ausgangstakt Ta aktiv, und die Ausgangssignale A1.0, A1.1, A1.2 und A1.3 werden dem Bus BU (Figur 1) aufgeschaltet. Dadurch, daß der Taktschritt um drei erhöht wird, wird erreicht, daß bei der sequentiellen Weiterverarbeitung der Ausgangssignale A1.0, A1.1 und A1.2 das korrekte Verknüpfungsergebnis auf dem Bus BU erscheint.

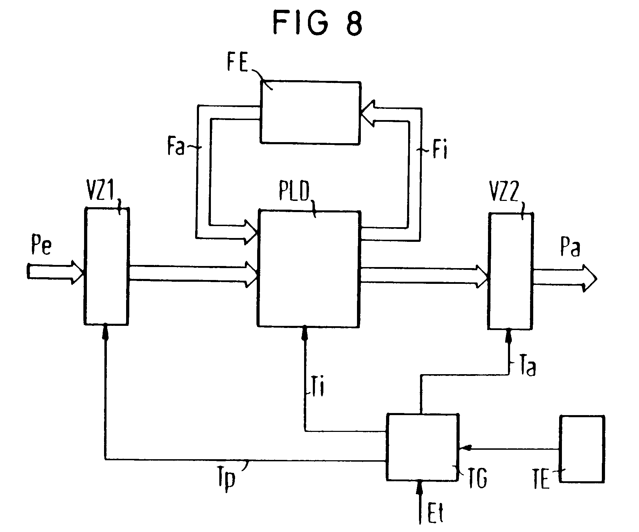

Damit das Automatisierungsgerät auch Zeit- und Zählfunktionen verwirklichen kann, weist ein Prozessor in Figur 8 eine programmierbare Funktionseinheit FE auf. Die in den Figuren 2 und 8 vorkommenden gleichen Teile sind mit gleichen Bezugszeichen versehen. In der Siemens-Druckschrift "S5-135U, Programmieren mit STEP 5", Berger H., 1986 sind verschiedene Zeit- und Zählfunktionen beschrieben und brauchen daher nicht näher erläutert zu werden. Der Logikbaustein PLD bildet z. B. aus den Prozeßeingangsdaten E0.0 und E0.1 (Figur 3, Figur 5) entsprechend einer Verknüpfungsvorschrift im Steuerprogramm Funktionseinheit-Eingangssignale Fi, die nach Maßgabe eines in der Funktionseinheit FE hinterlegten, seriell strukturierten Programms Funktionseinheit-Ausgangssignale Fa erzeugen. Diese Signale Fa werden von einem weiteren, hier nicht dargestellten, von dem Taktgeber TG bereitgestellten Takt taktgesteuert dem Logikbaustein PLD aufgeschaltet und bilden mit den Prozeßeingangsdaten Pe entsprechend den Steueranweisungen im Steuerprogramm Prozeßausgangsdaten Pa. Das in der Funktionseinheit FE hinterlegte und von diesem abzuarbeitende Programm wird aus dem Teil des seriell strukturierten Steuerprogramms im Programmiergerät PG (Figur 1) erstellt, der Zeit- und/oder Zählfunktionen aufweist, und in einem der Funktionseinheit FE zugeordneten Speicher im Automatisierungsgerät hinterlegt.

## Patentansprüche

1. Automatisierungssystem mit
- einem Programmiergerät (PG) zum Erstellen eines für eine serielle Bearbeitung strukturierten Steuerprogramms zur Lösung einer Automatisierungsaufgabe, wobei das Steuerprogramm für eine Binärsignalverarbeitung ausgelegt ist,
- einem Automatisierungsgerät, das nach Maßgabe des Steuerprogramms die Automatisierungsaufgabe löst, wobei das Automatisierungsgerät versehen ist mit einem programmierten Logikbaustein (PLD), der während des Steuerbetriebs des Automatisierungsgerätes Prozeßeingangsdaten (Pe; E0.0, E0.1, ...) in entsprechende Prozeßausgangsdaten (Pa; A0.0, A1.0, ...) umformt,
**dadurch gekennzeichnet**,
- daß das Automatisierungsgerät oder das Programmiergerät (PG) aufweist:
- Mittel zum Umsetzen des Steuerprogramms in eine zum Programmieren des programmierbaren Logikbausteins (PLD) erforderliche Form,
- Mittel zum Programmieren des Logikbausteins (PLD) mit dem umgesetzten Programm,
- daß das Automatisierungsgerät mit einer programmierbaren Funktionseinheit (FE) versehen ist, in die ein für eine serielle Bearbeitung strukturiertes Programm hinterlegt ist, das aus einem Teil des Steuerprogramms im Programmiergerät (PG) erstellt ist, wobei dieser Teil des Steuerprogramms Zeit- und/oder Zählfunktionen aufweist,
- daß der Logikbaustein (PLD) der Funktionseinheit (FE) Funktionseinheit-Eingangssignale (Fi) aufschaltet, welche der Logikbaustein (PLD) aus Prozeßeingangsdaten (Pe; E0.0, E0.1, ...) entsprechend einer Verknüpfungsvorschrift im Steuerprogramm bildet und welche die Funktionseinheit (FE) entsprechend dem Programm zu Funktionseinheit-Ausgangsdaten (Fa) verarbeitet und dem Logikbaustein (PLD) aufschaltet.

2. Automatisierungssystem nach Anspruch 1, **dadurch gekennzeichnet**,
- daß das Programmiergerät (PG) eine Einheit aufweist, welche die Anzahl von sequentiellen Weiterverarbeitungen entsprechend der Verknüpfungsvorschrift im Steuerprogramm ermittelt und einen Taktgeber (TG) im Automatisierungsgerät derart einstellt, daß für jede sequentielle Weiterverarbeitung der Takt (Ti) für den Betrieb des Logikbausteins (PLD) während eines Verarbeitungszyklus um einen Taktschritt erhöht wird.

3. Automatisierungssystem nach Anspruch 1 oder 2, **dadurch gekennzeichnet**,
- daß der Logikbaustein (PLD) als RAM-programmierbarer Baustein ausgebildet ist.

## Claims

1. An automation system having
- a programming device (PG) for generating a control program structured for serial processing for executing an automation task, the control program being designed for binary signal processing,
- an automation device which executes the automation task according to the control program, the automation device being provided with a programmed logic device (PLD) which, in the control mode of the automation device, converts process input data (Pe; E0.0, E0.1, ...) into corresponding process output data (Pa; A0.0, A1.0
**characterised in that**
- the automation device or the programming device (PG) has:
- means for converting the control program into a form required for programming the programmable logic device (PLD),
- means for programming the logic device (PLD) with the converted program,
- the automation device is provided with a function unit (FE) in which a program structured for serial processing is stored, which program is generated from a part of the control program in the programming device (PG), this part of the control program containing timing and/or counting functions,
- the logic device (PLD) feeds to the function unit (FE) function unit input signals (Fi) which the logic device (PLD) generates from process input data (Pe; E0.0, E0.1, ...) according to a linking instruction in the control program and which the function unit (FE) processes into function unit output data (Fa) in accordance with the program, and feeds to the logic device (PLD).

2. Automation system according to Claim 1,
characterised in that
- the programming device (PG) has a unit which determines the number of sequential, further processing operations according to the linking instruction in the control program, and sets a clock-pulse generator (TG) in the automation device so that for every sequential, further processing operation, the clock pulse (Ti) for operating the logic device (PLD) is advanced by one clock cycle during one processing cycle.

3. Automation system according to Claim 1 or 2,
characterised in that
- the logic device (PLD) is constructed as a RAM-programmable module.

## Revendications

1. Système d'automatisation comportant
- un appareil (PG) de programmation destiné à l'élaboration d'un programme de commande structuré pour un traitement sériel et destiné à l'accomplissement d'une tâche d'automatisation, le programme de commande étant conçu pour un traitement de signaux binaires,
- un appareil d'automatisation, qui accomplit la tâche d'automatisation en fonction du programme de commande, l'appareil d'automatisation étant muni d'un composant logique programmé (PLD), qui transforme pendant le fonctionnement de commande de l'appareil d'automatisation, des données (Pe ; E0.0, E0.1, ...) d'entrée de processus en données (Pa ; A0.0, A1.0, ...) de sortie de processus,
caractérisé en ce que
- l'appareil d'automatisation ou l'appareil (PG) de programmation comporte :
- des moyens de conversion du programme de commande en une forme nécessaire à la programmation du composant logique programmable (PLD),
- des moyens de programmation du composant logique (PLD) par le programme converti,
- l'appareil d'automatisation est muni d'une unité (FE) fonctionnelle programmable, dans laquelle est enregistré un programme structuré pour un traitement sériel et élaboré à partir d'une partie du programme de commande dans l'appareil (PG) de programmation, cette partie du programme de commande comportant des fonctions de temps et/ou de comptage,
- le composant logique (PLD) de l'unité (FE) fonctionnelle introduit des signaux (Fi) d'entrée de l'unité fonctionnelle, que le composant (PLD) logique forme à partir de données (Pe ; E0.0, E0.1, ...) d'entrée de processus en fonction d'une règle de combinaison dans le programme de commande et que l'unité fonctionnelle (FE) traite en fonction du programme en données (Fa) de sortie d'unité fonctionnelle et introduit dans le composant logique (PLD).

2. Système d'automatisation suivant la revendication 1,
caractérisé en ce que
- l'appareil (PG) de programmation comporte une unité, qui détermine le nombre de traitements séquentiels postérieurs en fonction de la règle de combinaison dans le programme de commande et qui règle un générateur (TG) de cadence dans l'appareil d'automatisation de sorte à faire avancer, pour chaque traitement séquentiel postérieur, la cadence (Ti) pour le fonctionnement du composant logique (PLD) pendant un cycle de traitement, d'un pas de cadence.

3. Système d'automatisation suivant la revendication 1 ou 2, caractérisé en ce que
- le composant logique (PLD) est sous forme de composant pouvant être programmé par RAM.
